# EUROPÄISCHE PATENTSCHRIFT

(11) **EP 1 197 739 B1**
(45) Veröffentlichungstag und Bekanntmachung des Hinweises auf die Patenterteilung: **28.07.2004**
(21) Anmeldenummer: 01890273.4
(22) Anmeldetag: 24.09.2001
(51) Int. Cl.: G01M 17/10, B61F 5/24

(54) **Verfahren und Vorrichtung zur Erkennung eines Schlingerdämpferschadens eines Schienenfahrzeuges**
Method and apparatus for detecting a yaw damper failure on a railway vehicle
Méthode et appareil pour la détection d' un défaut sur un amortisseur anti-lacets d' un véhicule ferroviaire

(30) Priorität: 12.10.2000 AT 17522000
(43) Veröffentlichungstag der Anmeldung: 17.04.2002
(73) Patentinhaber: Siemens SGP Verkehrstechnik GmbH, 1110 Wien (AT)
(72) Erfinder: Stengg, Werner, 8051 Graz (AT); Koller, Andreas, 8715 St. Lorezen 54 (AT); Haas, Herbert, 8020 Graz (AT)
(74) Vertreter: Matschnig, Franz, Dipl.-Ing.

(56) Entgegenhaltungen:
- WO-A-01/81888
- WO-A-99/54704
- DE-A- 3 316 011
- PATENT ABSTRACTS OF JAPAN vol. 018, no. 319 (M-1623), 17. Juni 1994 (1994-06-17) & JP 06 072328 A (EAST JAPAN RAILWAY CO;OTHERS: 01), 15. März 1994 (1994-03-15)

## Beschreibung

Die Erfindung betrifft ein Verfahren zur Erkennung eines Schlingerdämpferschadens eines Schienenfahrzeuges, wobei an zumindest zwei Punkten eines Drehgestells kontinuierlich die jeweilige Längsbeschleunigung ermittelt und als Beschleunigungssignal erfasst wird, und aus den Beschleunigungssignalen zumindest ein für den Schlingerdämpferzustand repräsentativer Kennwert ermittelt wird, der mit zumindest einem vorgebbaren Sollwert verglichen wird, wobei bei Überschreiten einer vorgebbaren Abweichung des Kennwertes von dem Sollwert ein Hinweissignal ausgelöst wird.

Weiters betrifft die Erfindung eine Vorrichtung zur Erkennung eines Schlingerdämpferschadens, wobei an zumindest zwei Punkten eines Drehgestells je zumindest ein Beschleunigungssensor angeordnet ist, der dazu eingerichtet ist, die jeweilige Längsbeschleunigung zu messen, wobei eine Auswerteeinheit vorgesehen ist, welche mit den Beschleunigungssensoren in Verbindung steht und dazu eingerichtet ist, von den Beschleunigungssensoren aufgenommene Beschleunigungssignale zu empfangen, aus diesen zumindest einen für den Schlingerdämpferzustand repräsentativen Kennwert zu ermitteln und diesen Kennwert mit zumindest einem vorgebbaren Sollwert zu vergleichen, wobei die Auswerteeinheit weiters dazu eingerichtet ist, bei Überschreiten einer vorgebbaren Abweichung des Kennwertes von dem Sollwert ein Hinweissignal zu generieren.

Der Erkennung von Schäden an Schlingerdämpfern eines Schienenfahrzeuges kommt hinsichtlich der Betriebssicherheit eine große Bedeutung zu, da ein defekter Schlingerdämpfer zu schweren Schäden an dem Schienenfahrzeug und letztlich sogar zu einem Entgleisen führen kann.

Üblicherweise werden aus Sicherheitsgründen bei bestimmten Fahrzeugtypen zwei Paare von Schlingerdämpfern einander gegenüberliegend zwischen Drehgestell und Wagenkasten angeordnet, sodass der Ausfall eines Schlingerdämpfers kompensiert werden kann. Aus der US 5 890 434 ist ein Triebwagen mit einem Fahrgestell und einem Querträger, der um eine zu der Schienenebene vertikalen Achse drehbar an dem Fahrgestell gelagert ist, bekannt geworden. Zwischen dem Querträger und dem Fahrgestell sind Schlingerdämpfer zur Unterdrückung von schwingungsartigen Querbewegungen vorgesehen.

Die GB 2 135 643 A beschreibt ein Schienenfahrzeug mit einem Fahrwerksrahmen, der auf Rädergestellen gelagert ist. Zur Vermeidung von Schlingerbewegungen des Fahrwerkrahmens relativ zu den Rädergestellen ist jedes Radgestell über Schlingerdämpfer mit dem Fahrwerksrahmen verbunden.

Oftmals wird der Zustand eines Schlingerdämpfers bei stehendem Zug beurteilt. Diese Methode ist jedoch von geringer Aussagekraft. Die einzig sichere Möglichkeit einer Beurteilung des Schlingerdämpferzustandes besteht darin, den Schlingerdämpfer auszubauen und auf einem Dämpferprüfstand dynamisch zu überprüfen. Ein Nachteil dieser Methode besteht in dem großen Zeit und Arbeitsaufwand sowie in den dadurch verursachten hohen Wartungskosten.

Eine Vorrichtung bzw. ein Verfahren der eingangs genannten Art ist aus der WO 99 54704 A bekannt geworden. Das bekannte Verfahren bzw. die bekannte Vorrichtung dient zur Überwachung von Schlingerdämpfern in einem Schienenfahrzeug. Der Zustand der Schlingerdämpfer wird hierbei mittels Beschleunigungssensoren überwacht, welche im Bereich der Schlingerdämpfer angeordnet sind und die Beschleunigung in Fahrzeuglängsrichtung messen. Zur Beurteilung eines Schlingerdämpferzustandes wird aus der Differenz zwischen Signalen der Beschleunigungssensoren ein Kennwert gebildet, wobei ein Warnsignal erzeugt wird, falls die Differenz einen vorgebbaren Wert überschreitet.

Nachteilig an der bekannten Vorrichtung bzw. dem bekannten Verfahren ist vor allem, dass die Berechnung des Kennwertes die translatorischen Beschleunigungsanteile des Schienenfahrzeuges nicht berücksichtigt.

Es ist daher eine Aufgabe der Erfindung, eine genaue und zuverlässige Feststellung eines Schlingerdämpferschadens auch bei Auftreten translatorischer Beschleunigungen zu ermöglichen. Diese Aufgabe wird mit einem Verfahren der eingangs genannten Art erfindungsgemäß dadurch gelöst, dass
innerhalb eines vorgebbaren Zeitfensters eine Hilberttransformation jedes Beschleunigungssignals durchgeführt wird, und aus dem Verhältnis der Beschleunigungssignale zu ihrer Hilberttransformierten die Phasenlagen der Beschleunigungssignale berechnet, wobei die Phasenlagen der Beschleunigungssignale miteinander verglichen werden, um zur Kennwertberechnung Zeitbereiche zu ermitteln, in welchen keine translatorischen Beschleunigungsanteile des Drehgestellrahmens in Fahrtrichtung auftreten.
Diese Lösung gestattet es, den Zustand eines Schlingerdämpfers auch während des Betriebes zu überprüfen und Beschädigungen schon in einem sehr frühen Stadium zu erkennen.

Vorteilhafterweise wird der Kennwert aus der Differenz der zumindest zwei Beschleunigungssignale gebildet wird.

Um Schlingerdämpferschäden eindeutig bestimmen zu können, wird je zumindest ein Beschleunigungssignal in einem vorgebbaren Abstand von und zu beiden Seiten der Längsmittelebene des Drehgestells erzeugt.

Die Diagnose der Schlingerdämpfer lässt sich dadurch weiter verbessern, dass zumindest ein weiteres Beschleunigungssignal erzeugt wird, welches den Verlauf der Beschleunigung des Drehgestells parallel zur Schienenebene und normal zur Fahrtrichtung des Schienenfahrzeuges wiedergibt.

Die Ermittlung des Kennwertes zur Charakterisierung der Schlingerdämpfer wird dadurch erleichtert, dass die Beschleunigungssignale gefiltert werden.

Eine vorteilhafte Variante der Erfindung besteht darin, dass innerhalb eines vorgebbaren Zeitfensters der Mittelwert des Betrages jedes Beschleunigungssignals berechnet und die Differenz dieser Mittelwerte gebildet wird oder innerhalb eines vorgebbaren Zeitfensters für den Betrag jedes der Beschleunigungssignale ein Schwellwert gebildet wird, unter dem eine vorgebbare Anzahl von Werten des Betrags des Beschleunigungssignals liegt und die Differenz dieser Schwellwerte gebildet wird.

Zur Realisierung des erfindungsgemäßen Verfahrens eignet sich im besonderen eine Vorrichtung zur Erkennung eines Schlingerdämpferschadens der eingangs genannten Art, bei welcher die Auswerteeinheit dazu eingerichtet ist, innerhalb eines vorgebbaren Zeitfensters eine Hilberttransformation jedes Beschleunigungssignals durchzuführen, aus dem Verhältnis der Beschleunigungssignale zu ihrer Hilberttransformierten die Phasenlagen der Beschleunigungssignale zu berechnen, sowie die Phasenlagen der Beschleunigungssignale miteinander zu vergleichen, um zur Kennwertberechnung Zeitbereiche zu ermitteln, in welchen keine translatorischen Beschleunigungsanteile des Drehgestellrahmens in Fahrtrichtung auftreten.

Vorteilhafterweise ist die Auswerteeinheit dazu eingerichtet, den Kennwert aus der Differenz der zumindest zwei Beschleunigungssignale zu bilden. Eine sehr genaue Diagnose des Schlingerdämpferzustandes lässt sich dadurch erreichen, dass zu beiden Seiten der Längsmittelebene des Drehgestells je zumindest ein Beschleunigungssensor vorgesehen ist. Die Diagnose kann dadurch weiter verbessert werden, dass zumindest ein weiterer Beschleunigungssensor vorgesehen ist, der dazu eingerichtet ist, den Beschleunigungsverlauf des Drehgestells parallel zur Schienenebene und normal zur Fahrtrichtung zu messen.

Vorteilhafterweise ist die Auswerteeinheit dazu eingerichtet, die von den Besehleunigungssensoren übermittelten Beschleunigungssignale zu filtern.

Um einen Kennwert zu ermitteln, ist die Auswerteeinheit dazu eingerichtet, innerhalb eines vorgebbaren Zeitfensters den Mittelwert des Betrages jedes Beschleunigungssignals zu berechnen und die Differenz dieser Mittelwerte zu bilden.

Eine günstige Ausführungsform der Erfindung besteht darin, dass die Auswerteeinheit dazu eingerichtet ist, innerhalb eines vorgebbaren Zeitfensters für den Betrag jedes der Beschleunigungssignale einen Schwellwert zu bilden, unter dem eine vorgebbare Anzahl von Werten des Betrags des Beschleunigungssignals liegt und die Differenz dieser Schwellwerte zu berechnen.

Die Erfindung samt weiteren Vorteilen wird im folgenden anhand einiger nicht einschränkender Ausführungsbeispiele näher erläutert, die in der Zeichnung veranschaulicht sind. In dieser zeigen schematisch
Fig. 1 in einer Draufsicht auf ein Drehgestell die Anordnung von Beschleunigungssensoren gemäß der Erfindung zur Ermittlung von Schlingerdämpferschäden,
Fig. 2 eine erfindungsgemäße Vorrichtung in einem vereinfachten Blockschaltbild,
Fig. 3a eine Beschleunigungsverteilung an einem Drehgestell ohne Schlingerdämpferschaden,
Fig. 3b eine mögliche Beschleunigungsverteilung an einem Drehgestell mit einem Schlingerdämpferschaden,
Fig. 4a eine weitere mögliche Beschleunigungsverteilung an einem Drehgestell,
Fig. 4b eine weitere mögliche Beschleunigungsverteilung an einem Drehgestell mit einem Schlingerdämpferschaden und
Fig. 5 in einem Diagramm den Verlauf zweier Beschleunigungssignale in Abhängigkeit von der Zeit.

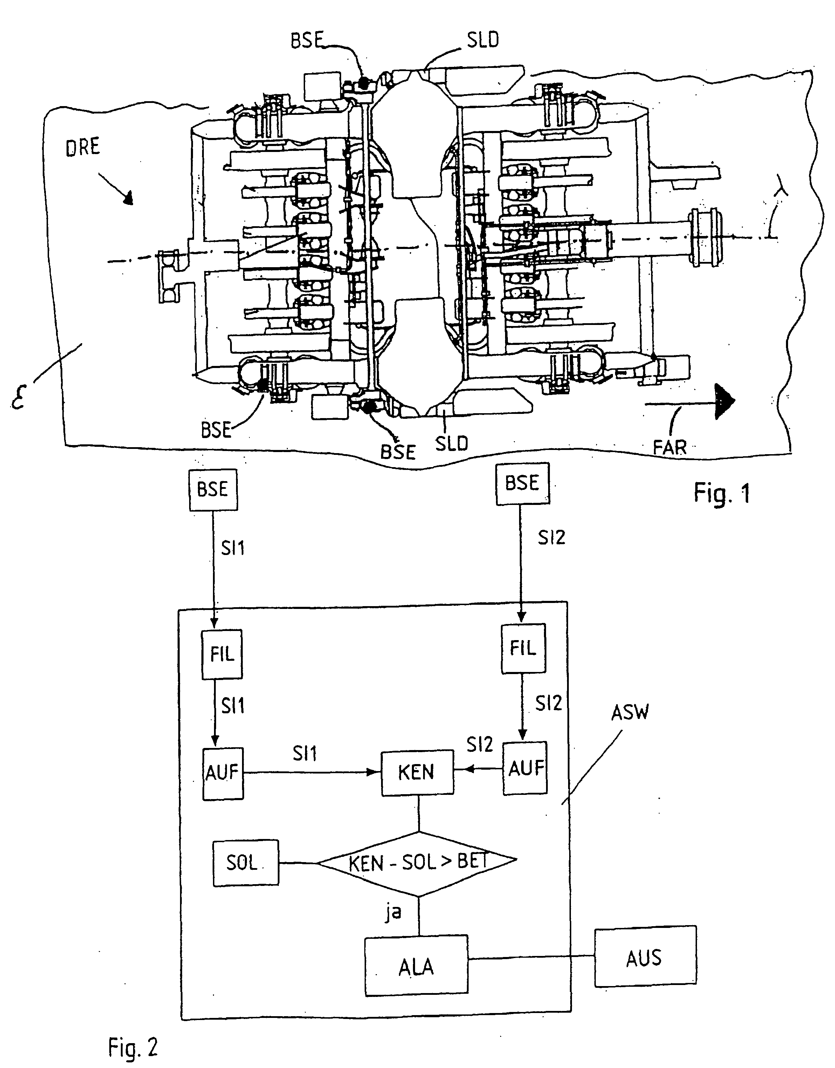

Gemäß Fig. 1 weist eine erfindungsgemäße Vorrichtung zur Erkennung eines schadhaften Schlingerdämpfers SLD eines Schienenfahrzeuges zumindest zwei Beschleunigungssensoren BSE auf, die an einander gegenüberliegenden Stellen in Bezug auf die Längsmittelebene λ eines Drehgestells DRE angeordnet sind.

Durch Anregungen über den Rad-Schienekontakt, die auch stochastischer Natur sein können, werden in dem Drehgestell DRE während der Fahrt Schwingungen induziert. Diese Schwingungen sind in Form von lokalen Beschleunigungsschwankungen messbar. Durch eine Analyse des induzierten Schwingungsverhaltens des Drehgestells DRE soll ein Schlingerdämpferschaden erkannt werden.

Ein wesentliches Element der vorliegenden Erfindung ist die Erkenntnis, dass besonders zuverlässige und repräsentative Messergebnisse erzielt werden können, wenn die Wirkungsrichtung der Beschleunigungssensoren BSE im wesentlichen in Fahrtrichtung verläuft. In der Zeichnung ist die Fahrtrichtung des Schienenfahrzeuges bzw. die Wirkungsrichtung der Beschleunigungssensoren BSE mit einem Pfeil FAR dargestellt. Unter Wirkungsrichtung eines Beschleunigungssensors BSE wird in diesem Dokument, die Richtung verstanden, in welcher der Sensor Beschleunigungskräfte bevorzugt aufnehmen und Signale liefern kann.

Die Beschleunigungssensoren können beispielsweise als piezoelektrische Sensoren ausgebildet sein, bei welchen in bekannter Weise ein piezoelektrischer Kristall zwischen zwei parallel zueinander verlaufenden Kondensatorplatten angeordnet ist. Findet diese Art von Sensoren Verwendung so kann man dadurch, dass die beiden Kondensatorplatten im wesentlichen normal zur Fahrtrichtung des Schienenfahrzeuges verlaufen, eine Übereinstimmung der Wirkungsrichtung der Beschleunigungssensoren mit der Fahrtrichtung erreichen. Selbstverständlich können auch andere bekannte Beschleunigungssensoren, die auf anderen Mechanismen beruhen, verwendet werden.

Zusätzlich zu den beiden Beschleunigungssensoren BSE, deren Wirkungsrichtung in Fahrtrichtung des Schienenfahrzeuges liegen, kann auch ein dritter Beschleunigungssensor BSE vorgesehen sein, dessen Wirkrichtung in einer Ebene parallel zur Schienenebene ε und normal zur Fahrtrichtung des Schienenfahrzeuges verläuft. Durch die Aufnahme eines von dem dritten Beschleunigungssensor aufgenommenes drittes Beschleunigungssignal ist es möglich, den Beschleunigungszustand des Drehgestells in einer Ebene eindeutig zu bestimmen. In der weiteren Betrachtung wird in diesem Dokument jedoch auf die Anordnung mit zwei einander gegenüberliegenden Beschleunigungssensoren BSE Bezug genommen, deren Wirkrichtung in Fahrtrichtung des Drehgestells DRE liegt.

Nach Fig. 2 nehmen die beiden Beschleunigungssensoren BSE Beschleunigungssignale SI1, SI2 im wesentlichen in Fahrtrichtung des Schienfahrzeuges auf und übermitteln diese an eine Auswerteeinheit ASW. Die Übertragung der Beschleunigungssignale SI1, SI2 von den Beschleunigungssensoren BSE an die Auswerteeinheit ASW kann über elektrische Leitungen, Glasfaserkabel oder drahtlos erfolgen.

Da die von den Anregungen des Rad-Schienekontaktes induzierten Schwingungen des Drehgestells DRE vorwiegend in einem bestimmten Frequenzbereich auftreten, werden nicht relevante Frequenzbereiche der gemessenen Beschleunigungssignale SI1, SI2 in der Auswerteeinheit ASW vor der Weiterverarbeitung durch eine geeignete Filterung FIL ausgeblendet. Um Messfehler zu eliminieren, sind weitere Maßnahmen zur Aufbereitung AUF der Beschleunigungssignale SI1, SI2 vorgesehen, die unten näher beschrieben sind, beispielsweise in Form einer Mittelwertbildung des Betrages jedes Beschleunigungssignals SI1, SI2.

Durch den Vergleich gleichzeitig von an einander entsprechenden, gegenüberliegenden Positionen des Drehgestell DRE aufgenommenen Beschleunigungssignalen SI1, SI2, die den Beschleunigungsverlauf in Fahrtrichtung des Drehgestells DRE wiedergeben, kann man auf den Zustand der Schlingerdämpfer SDL zurückschließen.

Zu diesem Zweck ist die Auswerteeinheit ASW dazu eingerichtet, durch Vergleich der Beschleunigungssignale SI1, SI2 miteinander, die über einen vorgebbaren Zeitraum aufgezeichnet werden, einen Kennwert KEN zu ermitteln und diesen mit einem Sollwert SOL zu vergleichen. Falls die Differenz des Kennwerts KEN und des Sollwerts SOL einen vorgebbaren Betrag BET überschreitet, kann von der Auswerteeinheit ASW ein Hinweissignal ALA generiert und in akustischer oder optischer Form auf einer Ausgabeeinheit AUS ausgegeben werden. Diese Ausgabeeinheit AUS kann beispielsweise ein Display auf dem Armaturenbrett eines Triebfahrzeuges sein.

Der Kennwert KEN kann auch zur späteren Auswertung laufend gespeichert werden. Zu diesem Zweck kann eine hier nicht dargestellte Speichervorrichtung vorgesehen sein, dabei finden bevorzugt bekannte elektronische Speicher Verwendung, wie sie zu Zwecken der Datenaufzeichnung dem Fachmann in großer Zahl bekannt sind.

Um den zeitlichen Verlauf des Schlingerdämpferzustandes analysieren zu können, kann der jeweils ermittelte Kennwert KEN laufend gespeichert werden.

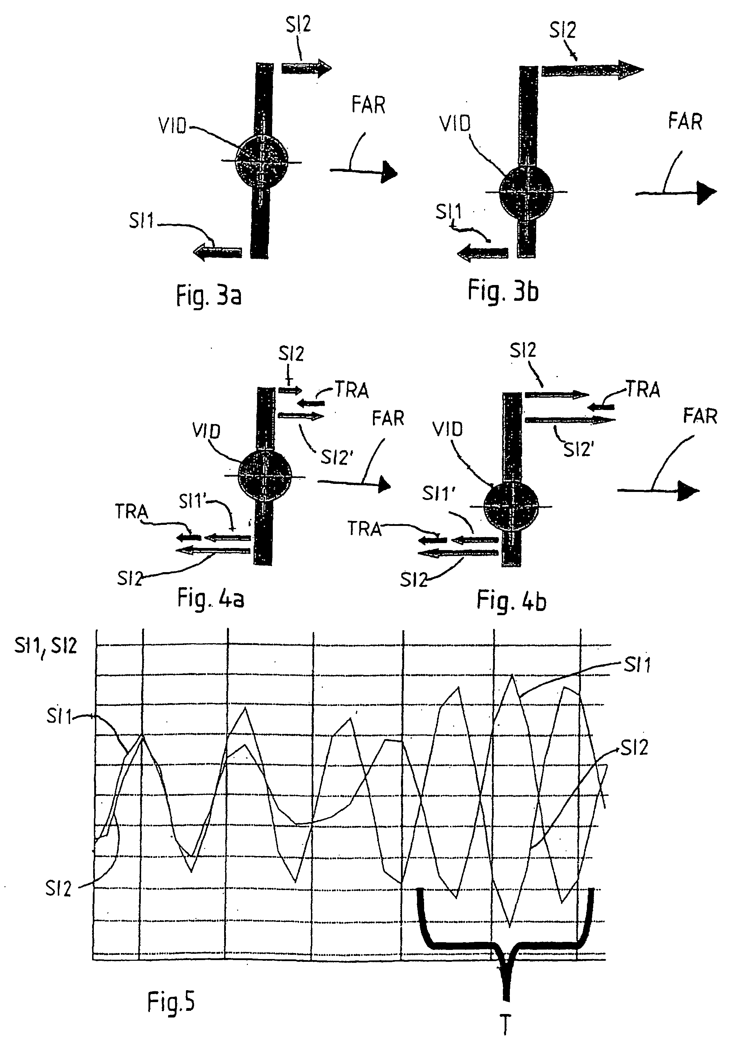

Bei der Beschleunigungsverteilung nach Fig. 3a sind die durch die Drehgestellschwingungen hervorgerufenen Beschleunigungen zu beiden Seiten der Längsmittelebene λ an dem Drehgestell DRE bei intakten Schlingerdämpfern SDL betragsgleich. Um die theoretische Behandlung der auftretenden Beschleunigungen zu vereinfachen, wird ein virtueller Drehpunkt VID angenommen, der bei intakten Schlingerdämpfern SDL im wesentlichen dem Schwerpunkt des Drehgestelles DRE entspricht. Schwingungen des Drehgestells DRE in einer Ebene parallel zur Schienenebene ε können als Drehungen um diesen virtuellen Drehpunkt VID beschrieben werden. Liegt kein Schlingerdämpferschaden vor, so ist die Summe der beiden Beschleunigungssignale SI1, SI2 null. Um in der Praxis zu erreichen, dass die Summe der beiden gemessenen Beschleunigungssignale SI1, SI2 bei intakten Schlingerdämpfem Null ist, werden die beiden Beschleunigungssensoren BSE an Positionen des Drehgestells DRE angeordnet, die bezüglich der Längsmittelebene λ symmetrisch zueinander liegen.

Ist ein Schlingerdämpfer SDL beschädigt, so sind z. B. nach Fig. 3b seine Dämpfungseigenschaften verändert und in weiterer Folge erfolgt eine Verschiebung des virtuellen Drehpunktes VID in Richtung des Schlingerdämpfers SDL mit der höheren Dämpfung. Aufgrund dieser Verschiebung kommt es zu einer Veränderung der gemessenen Beschleunigungssignale SI1, SI2, und man erhält bei Summierung der beiden Beschleunigungssignale SI1, SI2 einen Wert ungleich Null.

Treten nach den Fig. 4a, 4b weitere Beschleunigungen auf, die nicht auf eine Schlingerbewegung des Drehgestells zurückzuführen sind, sondern von rein translatorischen Bewegungsanteilen herrühren, beispielsweise von einem Nicken des Drehgestells in Fahrtrichtung, so gilt es, die Beschleunigungssignale SI1, SI2 zu separieren, da eine Schadensdetektion mit einer einfachen Summenbildung in diesem Fall nicht möglich ist. Ein einfaches Summieren der Beschleunigungssignale SI1, SI2 ergibt in diesem Fall nämlich immer ein Ergebnis ungleich Null, da die beiden auf die translatorische Beschleunigung des Schienenfahrzeuges zurückzuführenden translatorischen Beschleunigungssignale TRA das gleiche Vorzeichen bzw. eine gleiche Phasenlage aufweisen.

Zur Ausblendung translatorischer Beschleunigungssignale TRA, welche den auf eine Drehbewegung des Drehgestells DRE zurückzuführenden Beschleunigungssignalen SI1', SI2' überlagert sind, werden Zeitbereiche ermittelt, in welchen keine translatorischen Bewegungsanteile des Drehgestellrahmens in Fahrtrichtung auftreten.

Diese Zeitbereiche T sind gemäß Fig. 5 durch eine Phasenverschiebung der beiden Beschleunigungssignale SI1, SI2, die hier in Abhängigkeit von der Zeit t dargestellt sind, von ungefähr 180° charakterisiert. Zum Auffinden dieser Bereiche ist es notwendig, die Phasenlage der beiden Beschleunigungssignale SI1, SI2 zu berechnen und miteinander zu vergleichen.

Die Bestimmung der Phasenlage der Beschleunigungssignale SI1, SI2 kann mit Hilfe einer Hilberttransformation erfolgen. Dazu wird von jedem der beiden Beschleunigungssignale SI1, SI2 die Hilbertransformierte gebildet und als Imaginärteil des jeweiligen Beschleunigungssignals angesehen. Die Phasenlage jedes Beschleunigungssignals SI1, SI2 kann dann gemäß den aus der Funktionentheorie bzw. dem Rechnen mit komplexen Zahlen bekannten Regeln aus seinem Verhältnis zu seiner Hilberttransformierten berechnet werden. Zu dem Begriff der Hilberttransformierten siehe auch "Digitale Verarbeitung analoger Signale" Oldenburg-Verlag 1999, S. T. Stearns, D. R. Hush, Kap. 8.10, S. 234.

Innerhalb der Zeitbereiche T, in denen die Bedingung erfüllt ist, dass die Phasenlage der beiden Beschleunigungssignale SI1, SI2 in einem Bereich um 180° liegt, wird der Mittelwert des Betrages jedes Beschleunigungssignals SI1, SI2 berechnet. Anschließend wird die Differenz dieser Mittelwerte gebildet. Zur Bildung des Kennwertes KEN wird beispielsweise eine vorgebbare Anzahl solcher Differenzen gebildet und über einen Zeitraum gleitend gemittelt.

Eine andere Möglichkeit der Kennwertbildung besteht darin, für den Betrag jedes Signals je einen Schwellwert zu ermitteln, unter dem ein vorgebbarer Prozentsatz von Abtastwerten liegt. Dieser auf einen vorgebbaren Prozentsatz von Abtastwerten bezogene Schwellwert gibt an, welche Werte der gemessenen Beschleunigungssignale SI1, SI2 in der weiteren Berechnung unberücksichtig bleiben sollen. Ein beispielsweise auf 99% bezogener Schwellwert legt eine Schwelle fest, unter der 99% des gemessenen Signals liegen. Auf diese Weise sollen Messfehler eliminiert und aus der weiteren Betrachtung ausgeblendet werden. Ist die Differenz der beiden auf die soeben beschriebene Weise ermittelten Schwellwerte wesentlich von Null verschieden, so liegt ein einseitiger Schlingerdämpferdefekt vor.

Das oben beschriebene Verfahren kann selbstverständlich unter Verwendung bekannter, entsprechend programmierter Mikroprozessoren online durchgeführt werden. Dem Fachmann sind darüber hinaus zahlreiche Programme bzw. Programmiersprachen bekannt, die sich zur Realisierung des erfindungsgemäßen Verfahrens eignen, beispielsweise Mathematica, Matlab etc.

## Patentansprüche

1. Verfahren zur Erkennung eines Schlingerdämpferschadens eines Schienenfahrzeuges, wobei an zumindest zwei Punkten eines Drehgestells (DRE) kontinuierlich die jeweilige Längsbeschleunigung ermittelt und als Beschleunigungssignal (SI1, SI2) erfasst wird, und aus den Beschleunigungssignalen (SI1, SI2) zumindest ein für den Schlingerdämpferzustand repräsentativer Kennwert (KEN) ermittelt wird, der mit zumindest einem vorgebbaren Sollwert (SOL) verglichen wird, wobei bei Überschreiten einer vorgebbaren Abweichung des Kennwertes (KEN) von dem Sollwert (SOL) ein Hinweissignal (ALA) ausgelöst wird, **dadurch gekennzeichnet, dass** innerhalb eines vorgebbaren Zeitfensters eine Hilberttransformation jedes Beschleunigungssignals (SI1, SI2) durchgeführt wird, und aus dem Verhältnis der Beschleunigungssignale (SI1, SI2) zu ihrer Hilberttransformierten die Phasenlagen der Beschleunigungssignale (SI1, SI2) berechnet, wobei die Phasenlagen der Beschleunigungssignale (SI1, SI2) miteinander verglichen werden, um zur Kennwertberechnung Zeitbereiche (T) zu ermitteln, in welchen keine translatorischen Beschleunigungsanteile des Drehgestellrahmens in Fahrtrichtung auftreten.

2. Verfahren nach Anspruch 1,**dadurch gekennzeichnet, dass** der Kennwert (KEN) aus der Differenz der zumindest zwei Beschleunigungssignale (SI1, SI2) gebildet wird.

3. Verfahren nach Anspruch 1 oder 2, **dadurch gekennzeichnet, dass** je zumindest ein Beschleunigungssignal (SI1, SI2) in einem vorgebbaren Abstand von und zu beiden Seiten der Längsmittelebene (λ) des Drehgestells (DRE) erzeugt wird.

4. Verfahren nach einem der Ansprüche 1 bis 3, **dadurch gekennzeichnet, dass** zumindest ein weiteres Beschleunigungssignal erzeugt wird, welches den Verlauf der Beschleunigung des Drehgestells parallel zur Schienenebene und normal zur Fahrtrichtung des Schienenfahrzeuges wiedergibt.

5. Verfahren nach einem der Ansprüche 1 bis 4, **dadurch gekennzeichnet, dass** die Beschleunigungssignale (SI1, SI2) gefiltert werden.

6. Verfahren nach einem der Ansprüche 1 bis 5, **dadurch gekennzeichnet, dass** innerhalb eines vorgebbaren Zeitfensters der Mittelwert des Betrags jedes Beschleunigungssignals (SI1, SI2) berechnet und die Differenz dieser Mittelwerte gebildet wird.

7. Verfahren nach einem der Ansprüche 1 bis 5, **dadurch gekennzeichnet, dass** innerhalb eines vorgebbaren Zeitfensters für den Betrag jedes der Beschleunigungssignale (SI1, SI2) ein Schwellwert gebildet wird, unter dem eine vorgebbare Anzahl von Werten des Betrags des Beschleunigungssignals (SI1, SI2) liegt und die Differenz dieser Schwellwerte gebildet wird.

8. Vorrichtung zur Erkennung eines Schlingerdämpferschadens, wobei an zumindest zwei Punkten eines Drehgestells je zumindest ein Beschleunigungssensor (BSE) angeordnet ist, der dazu eingerichtet ist, die jeweilige Längsbeschleunigung zu messen, wobei eine Auswerteeinheit (ASW) vorgesehen ist, welche mit den Beschleunigungssensoren (BSE) in Verbindung steht und dazu eingerichtet ist, von den Beschleunigungssensoren (BSE) aufgenommene Beschleunigungssignale (SI1, SI2) zu empfangen, aus diesen zumindest einen für den Schlingerdämpferzustand repräsentativen Kennwert (KEN) zu ermitteln und diesen Kennwert (KEN) mit zumindest einem vorgebbaren Sollwert (SOL) zu vergleichen, wobei die Auswerteeinheit (ASW) weiters dazu eingerichtet ist, bei Überschreiten einer vorgebbaren Abweichung des Kennwertes (KEN) von dem Sollwert (SOL) ein Hinweissignal (ALA) zu generieren, **dadurch gekennzeichnet, dass** die Auswerteeinheit dazu eingerichtet ist, innerhalb eines vorgebbaren Zeitfensters eine Hilberttransformation jedes Beschleunigungssignals (SI1, SI2) durchzuführen, aus dem Verhältnis der Beschleunigungssignale (SI1, SI2) zu ihrer Hilberttransformierten die Phasenlagen der Beschleunigungssignale (SI1, SI2) zu berechnen, sowie die Phasenlagen der Beschleunigungssignale (SI1, SI2) miteinander zu vergleichen, um zur Kennwertberechnung Zeitbereiche (T) zu ermitteln, in welchen keine translatorischen Beschleunigungsanteile des Drehgestellrahmens in Fahrtrichtung auftreten.

9. Vorrichtung nach Anspruch 8, **dadurch gekennzeichnet, dass** die Auswerteeinheit (ASW) dazu eingerichtet ist, den Kennwert (KEN) aus der Differenz der zumindest zwei Beschleunigungssignale (SI1, SI2) zu bilden.

10. Vorrichtung nach Anspruch 8 oder 9, **dadurch gekennzeichnet, dass** zu beiden Seiten der Längsmittelebene (λ) des Drehgestells je zumindest ein Beschleunigungssensor (BSE) vorgesehen ist.

11. Vorrichtung nach einem der Ansprüche 8 bis 10, **dadurch gekennzeichnet, dass** zumindest ein weiterer Beschleunigungssensor vorgesehen ist, der dazu eingerichtet ist, den Beschleunigungsverlauf des Drehgestells normal zur Fahrtrichtung zu messen.

12. Vorrichtung nach einem der Ansprüche 8 bis 11, **dadurch gekennzeichnet, dass** die Auswerteeinheit (ASW) dazu eingerichtet ist, die von den Beschleunigungssensoren (BSE) übermittelten Beschleunigungssignale (SI1, SI2) zu filtern.

13. Vorrichtung nach einem der Ansprüche 8 bis 12, **dadurch gekennzeichnet, dass** die Auswerteeinheit (ASW) dazu eingerichtet ist, innerhalb eines vorgebbaren Zeitfensters den Mittelwert des Betrages jedes Beschleunigungssignals (SI1, SI2) zu berechnen und die Differenz dieser Mittelwerte zu bilden.

14. Vorrichtung nach einem der Ansprüche 8 bis 13, **dadurch gekennzeichnet, dass** die Auswerteeinheit dazu eingerichtet ist, innerhalb eines vorgebbaren Zeitfensters für den Betrag jedes der Beschleunigungssignale einen Schwellwert zu bilden, unter dem eine vorgebbare Anzahl von Werten des Betrags des Beschleunigungssignals (SI1, SI2) liegt und die Differenz dieser Schwellwerte zu berechnen.

## Claims

1. A method of detecting a damaged oscillation restraint device on a rail vehicle, in which the current longitudinal acceleration is continuously determined at at least two points of a bogie (DRE) and is registered as the acceleration signal (SI1, SI2), and from said acceleration signals at least one characteristic value (KEN) representative of the state of the oscillation restraint device is computed, which characteristic value is compared with at least one predefined set point (SOL), and when a predefined deviation of said characteristic value (KEN) from said set point (SOL) is exceeded, an alerting signal (ALA) is produced, **characterized in that** within a predefined time window a Hilbert transformation of each acceleration signal (SI1, SI2) is carried out, and from the ratio of said acceleration signals to the Hilbert-transformed signals the phase relationships of said acceleration signals (SI1, SI2) are computed, which phase relationships of said acceleration signals are compared with each other in order to ascertain, for computation of said characteristic value, time domains (T) in which no translational acceleration components of the bogie frame occur in the direction of travel.

2. A method as defined in claim 1, **characterized in that** said characteristic value (KEN) is formed from the difference between said at least two acceleration signals (SI1, SI2).

3. A method as defined in claim 1 or claim 2, **characterized in that** said at least one acceleration signal (SI1, SI2) is produced at a predefined distance from, and on both sides of, the longitudinal central plane (λ) of said bogie (DRE).

4. A method as defined in any one of claims 1 to 3, **characterized in that** at least one further acceleration signal is produced, which reproduces the course of acceleration of said bogie parallel to the plane of the rails and normal to the direction of travel of said rail vehicle.

5. A method as defined in any one of claims 1 to 4, **characterized in that** said acceleration signals (SI1, SI2) are filtered.

6. A method as defined in any one of claims 1 to 5, **characterized in that** within a predefined time window the average of the magnitudes of each acceleration signal (SI1, SI2) is computed and the difference of these averages is formed.

7. A method as defined in any one of claims 1 to 5, **characterized in that** within a predefined time window, a threshold value is formed for the magnitude of each of said acceleration signals (SI1, SI2), which threshold value tops a predefined number of values of the magnitude of said acceleration signal (SI1, SI2), and the difference of these threshold values is formed.

8. A device for detecting a damaged oscillation restraint device, in which there is disposed an acceleration pick-up (BSE) at at least two points of a bogie, which acceleration pick-up is adapted to measure the current longitudinal acceleration, and an evaluating unit (ASW) is provided which is connected to said acceleration pick-up(s) and is adapted to receive acceleration signals (SI1, SI2) detected by said accelerator pick-ups (BSE) and to compute from said acceleration signals at least one characteristic value (KEN) representative of the state of the oscillation restraint device and to compare said characteristic value with at least one predefined set point (SOL), said evaluating unit (ASW) being further adapted to generate an alerting signal (ALA) when a predefined deviation of said characteristic value (KEN) from said set point (SOL) is exceeded, **characterized in that** said evaluating unit is adapted to carry out, within a predefined time window, a Hilbert transformation of each acceleration signal (SI1, SI2), to compute the phase relationships of said acceleration signals (SI1, SI2) from the ratio of said acceleration signals to the Hilbert-transformed signals, and to compare said phase relationships of said acceleration signals (SI1, SI2) with each other, in order to ascertain, for computation of said characteristic value, time domains in which no translational acceleration components of the bogie frame occur in the direction of travel.

9. A device as defined in claim 8, **characterized in that** said evaluation unit (ASW) is adapted to form said characteristic value (KEN) from the difference of said at least two acceleration signals SI1, SI2).

10. A device as defined in claim 8 or claim 9, **characterized in that** at least one acceleration pick-up (BSE) is provided on each side of the longitudinal central plane (λ) of said bogie.

11. A device as defined in any one of claims 8 to 10, **characterized in that** at least one further acceleration pick-up is provided, which is adapted to measure the course of acceleration of the bogie normal to the direction of travel.

12. A device as defined in any one of claims 8 to 11, **characterized in that** said evaluation unit (ASW) is adapted to filter said acceleration signals SI1, SI2) transmitted by said acceleration pick-ups (BSE).

13. A device as defined in any one of claims 8 to 12, **characterized in that** said evaluation unit (ASW) is adapted to compute, within a predefined time window, the average of the magnitudes of each of said acceleration signals (SI1, SI2) and to form the difference of these averages.

14. A device as defined in any one of claims 8 to 13, **characterized in that** said evaluation unit (ASW) is adapted to compute, within a predefined time window, a threshold value for the magnitude of each of said acceleration signals, which threshold value tops a predefined number of values of the magnitude of said acceleration signals (SI1, SI2), and to form the difference of these threshold values.

## Revendications

1. Procédé pour la détection d'un défaut sur un amortisseur anti-lacets d'un véhicule ferroviaire, dans lequel on détermine en continu l'accélération longitudinale respective en au moins deux points d'un bogie (DRE) et on la détecte sous la forme de signaux d'accélération (SI1, SI2), et on détermine à partir des signaux d'accélération (SI1, SI2) au moins une grandeur caractéristique (KEN) représentative de l'état d'un amortisseur anti-lacets, qui est comparée à au moins une valeur de consigne prédéterminable (SOL), et dans lequel on émet un signal d'avertissement (ALA) lors du dépassement d'un écart prédéterminable entre la grandeur caractéristique (KEN) et la valeur de consigne (SOL), **caractérisé en ce que** l'on exécute à l'intérieur d'une fenêtre de temps prédéterminable une transformation de Hilbert de chaque signal d'accélération (SI1, SI2) et **en ce que** l'on calcule les positions de phase des signaux d'accélération (SI1, SI2) à partir du rapport entre les signaux d'accélération (SI1, SI2) et leurs transformées de Hilbert, dans lequel les positions de phase des signaux d'accélération (SI1, SI2) sont comparées les unes aux autres, afin de déterminer des plages de temps (T) pour le calcul de la grandeur caractéristique, dans lesquelles il ne se produit aucune composante d'accélération en translation du châssis du bogie dans la direction du déplacement.

2. Procédé selon la revendication 1, **caractérisé en ce que** l'on forme la grandeur caractéristique (KEN) à partir de la différence entre les au moins deux signaux d'accélération (SI1, SI2).

3. Procédé selon la revendication 1 ou 2, **caractérisé en ce que** l'on produit au moins un signal d'accélération (SI1, SI2) à une distance prédéterminable de chaque côté du plan central longitudinal (λ) du bogie (DRE).

4. Procédé selon l'une quelconque des revendications 1 à 3, **caractérisé en ce que** l'on produit au moins un autre signal d'accélération, qui reproduit l'évolution de l'accélération du bogie parallèlement au plan des rails et normalement à la direction du déplacement du véhicule ferroviaire.

5. Procédé selon l'une quelconque des revendications 1 à 4, **caractérisé en ce que** l'on filtre les signaux d'accélération (SI1, SI2).

6. Procédé selon l'une quelconque des revendications 1 à 5, **caractérisé en ce qu'**à l'intérieur d'une fenêtre de temps prédéterminable, on calcule la valeur moyenne du montant de chaque signal d'accélération (SI1, SI2) et on forme la différence entre ces valeurs moyennes.

7. Procédé selon l'une quelconque des revendications 1 à 5, **caractérisé en ce qu'**à l'intérieur d'une fenêtre de temps prédéterminable, on calcule pour le montant de chaque signal d'accélération (SI1, SI2) une valeur de seuil, en dessous de laquelle se trouve un nombre prédéterminable de valeurs du montant du signal d'accélération (SI1, SI2) et on forme la différence entre ces valeurs de seuil.

8. Dispositif pour la détection d'un défaut sur un amortisseur anti-lacets d'un véhicule ferroviaire, dans lequel au moins un détecteur d'accélération (BSE) est disposé en au moins deux points d'un bogie, et est agencé en vue de mesurer l'accélération longitudinale respective, dans lequel il est prévu une unité d'exploitation (ASW), qui est en liaison avec les détecteurs d'accélération (BSE) et qui est agencée en vue de recevoir des signaux d'accélération (SI1, SI2) enregistrés par les détecteurs d'accélération (BSE), de déterminer à partir de ceux-ci au moins une grandeur caractéristique (KEN) représentative de l'état d'un amortisseur anti-lacets et de comparer cette grandeur caractéristique (KEN) à au moins une valeur de consigne prédéterminable (SOL), dans lequel l'unité d'exploitation (ASW) est en outre agencée en vue de générer un signal d'avertissement (ALA) lors du dépassement d'un écart prédéterminable entre la grandeur caractéristique (KEN) et la valeur de consigne (SOL), **caractérisé en ce que** l'unité d'exploitation est agencée en vue, à l'intérieur d'une fenêtre de temps prédéterminable, d'exécuter une transformation de Hilbert de chaque signal d'accélération (SI1, SI2), de calculer les positions de phase des signaux d'accélération (SI1, SI2) à partir du rapport des signaux d'accélération (SI1, SI2) à leurs transformées de Hilbert, ainsi que de comparer les positions de phase des signaux d'accélération (SI1, SI2) les unes aux autres, afin de déterminer des plages de temps (T) pour le calcul de la grandeur caractéristique, dans lesquelles il ne se produit aucune composante d'accélération en translation du châssis du bogie dans la direction du déplacement.

9. Dispositif selon la revendication 8, **caractérisé en ce que** l'unité d'exploitation (ASW) est agencée en vue de former la grandeur caractéristique (KEN) à partir de la différence entre les au moins deux signaux d'accélération (SI1, SI2).

10. Dispositif selon la revendication 8 ou 9, **caractérisé en ce qu'**il est prévu au moins un détecteur d'accélération (BSE) de chaque côté du plan central longitudinal (λ) du bogie.

11. Dispositif selon l'une quelconque des revendications 8 à 10, **caractérisé en ce qu'**il est prévu au moins un autre détecteur d'accélération, qui est agencé en vue de mesurer l'évolution de l'accélération du bogie normalement à la direction du déplacement.

12. Dispositif selon l'une quelconque des revendications 8 à 11, **caractérisé en ce que** l'unité d'exploitation (ASW) est agencée en vue de filtrer les signaux d'accélération (SI1, SI2) transmis par les détecteurs d'accélération (BSE).

13. Dispositif selon l'une quelconque des revendications 8 à 12, **caractérisé en ce que** l'unité d'exploitation (ASW) est agencée en vue, à l'intérieur d'une fenêtre de temps prédéterminable, de calculer la valeur moyenne du montant de chaque signal d'accélération (SI1, SI2) et de former la différence entre ces valeurs moyennes.

14. Dispositif selon l'une quelconque des revendications 8 à 13, **caractérisé en ce que** l'unité d'exploitation est agencée en vue, à l'intérieur d'une fenêtre de temps prédéterminable, de former pour le montant de chacun des signaux d'accélération une valeur de seuil, en dessous de laquelle se trouve un nombre prédéterminable de valeurs du montant du signal d'accélération (SI1, SI2) et de calculer la différence entre ces valeurs de seuil.
